Europäisches Patentamt

European Patent Office

Office européen des brevets

(11) Publication number: **0 209 888**
**B1**

# EUROPEAN PATENT SPECIFICATION

(45) Date of publication of the patent specification:
07.03.90

(51) Int. Cl.⁴: **B01F 3/08**
// B05B7/04, B29B7/42

(21) Application number: 86110040.2

(22) Date of filing: 22.07.86

(54) Mixing method of reaction raw-material and its apparatus.

(30) Priority: 23.07.85 JP 162419/85
24.10.85 JP 238039/85

(43) Date of publication of application:
28.01.87 Bulletin 87/5

(45) Publication of the grant of the patent:
07.03.90 Bulletin 90/10

(84) Designated Contracting States:
DE FR GB

(56) References cited:
DE-A- 1 806 396
DE-A- 2 809 228

(73) Proprietor: Matsushita Electric Industrial Co., Ltd., 1006, Oaza Kadoma, Kadoma-shi Osaka-fu, 571(JP)

(72) Inventor: Inoue, Takao, 28-7, Yamadaikehigashimachi, Hirakata-shi Osaka-fu(JP)

(74) Representative: Eisenführ & Speiser, Martinistrasse 24, D-2800 Bremen 1(DE)

ACTORUM AG

## Description

The invention relates to a method of mixing reaction materials in the form of liquids by individually feeding the liquids to discharge openings located in a cylindrical wall which surrounds a shaft having at least one spiral groove in its circumferential face and rotating the shaft such that the liquids are fed from the discharge openings through the groove(s) of the shaft to an outlet of the cylindrical wall.

The invention also relates to an apparatus for mixing such reaction materials. Especially, the invention shall be used in a dispenser for two-liquid mixture type bonding agents, for apparatuses for vacuum-injection type, and reaction injection molding or the like.

In production lines for manufacturing appliances etc. two-liquid bonding mixtures are being used which harden at room temperature. The operator normally mixed the two components by hand, but since the hardening process proceeded too fast, the mixture could only be used for a relatively short time. So, only very small quantities could be mixed at a time.

It is also known to introcduce raw-materials into a container and mix the raw-materials by shaped blades. The container and the mixing blades had to be washed after a certain time before the raw-materials hardened, so that much material was lost, thus causing an increase in production costs. Furthermore, the washing liquid deteriorated the mixed raw-materials.

From DE-A 1 896 396 an apparatus for mixing two kinds of materials is known, comprising a nozzle body having individual discharge openings located in a cylindrical wall which surrounds a shaft having at least one spiral groove in its circumferential face, and the shaft being rotatable so that the materials are fed from the discharge openings through the groove of the shaft to an outlet of the cylindrical wall. In such an apparatus the two components are transported by the cylindrical grooves towards an outlet, but the volumes of discharge are not exactly metered as is necessary for precisely metering reaction materials.

According to the invention a method of mixing reaction materials of the kind described above is proposed, which is characterized in that the liquids are sequentially scraped from the discharge openings into the groove(s), and are finally mixed in a separate mixing chamber at the end of the spiral groove(s).

An apparatus according to the invention for solving the object of the invention is characterized in that the shaft having at least one spiral groove is surrounded by a cylindrical wall, the surfaces between the groove(s) at the circumference of the shaft being smooth and tightly fitting into the cylindrical wall, and the lead of the windings being larger than the width of the discharge openings.

The method and the apparatus according to the invention have the advantage that the reaction materials to be mixed are precisely metered during revolution of the rotating shaft, and mixing of the two defined quantities of reaction materials first takes place within the spiral groove(s), and can be finally mixed in a separate mixing chamber, if necessary.

Preferable embodiments of the apparatus according to the invention are defined in the dependent claims.

BRIEF DESCRIPTION OF THE DRAWINGS

These and other objects and features of the present invention will become apparent from the following description taken in conjunction with preferred embodiments thereof with reference to the accompanying drawings, in which:

Figs. 1A and 1B show sectional views of the nozzle portion of a mixing apparatus of a first embodiment of the present invention;

Fig. 2 is a partial view of the rotation shaft showing the mixing method of the present invention;

Fig. 3 is a side sectional view of a handy-type dispenser where the mixing method of the present invention is being used for dispensing of a room-temperature hardening type expoxide bonding agent;

Fig. 4 is a schematic view where the present invention has been applied to a reactive injection molding machine for urethane, nylon, polyester amide or the like;

Figs. 5A and 5B show sectional views of the mixing head of a second embodiment of the present invention;

Fig. 6 is a view for illustrating the portion of the rotation shaft;

Fig. 7 is a plan view of the mixing head of Fig. 5; and

Fig. 8 is a schematic view showing a nylon reactive injection-molding machine using the mixing head of the present invention.

DETAILED DESCRIPTION OF THE INVENTION

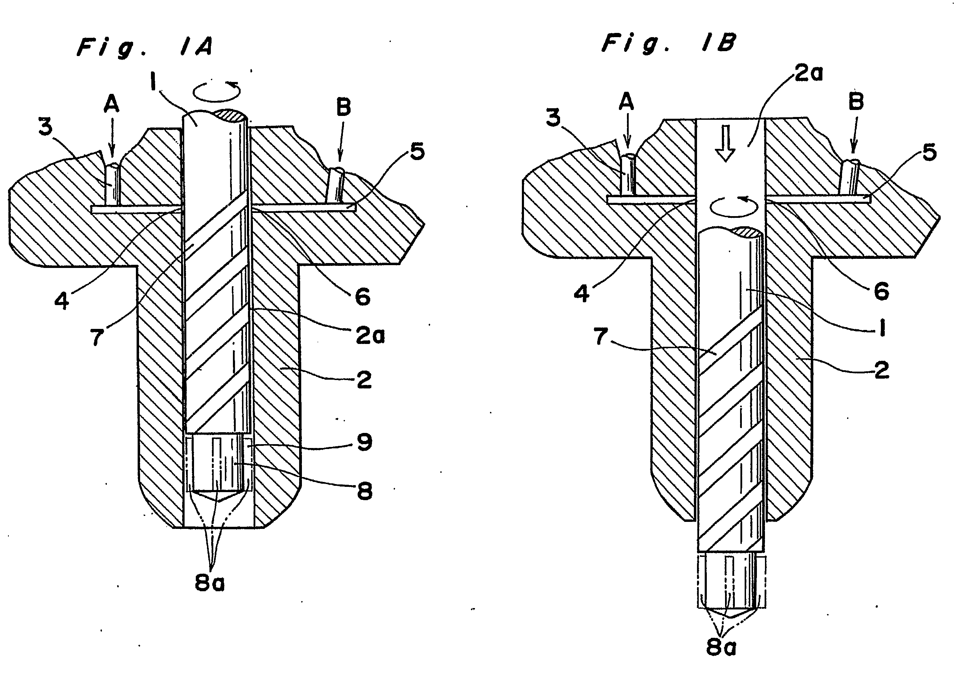

Referring now to the drawings, there is shown in Figs. 1A and 1B a mixing nozzle portion composed of a rotation shaft 1 having spiral grooves 7, a nozzle main body 2 having a cylindrical wall 2a, through which the rotation shaft 1 longitudinally extends, feed routes 3 and 5 for feeding reaction raw-materials A and B (Aralditrapid main agent, hardening agent manufactured by Ciba Geigy Co., Ltd.) to the grooves 7 in the outer periphery of the rotation shaft 1 within the nozzle main-body 2, discharge openings 4 and 6 in contact against the outer peripheral face of the rotation shaft 1. A tip end 8 of the rotation shaft 1 is made narrower than the shaft 1 so that it has a smaller diameter for mixing in a mixing chamber 9. Furthermore, a stirring blade 8a is provided, if necessary, as shown by an imaginary line around the tip end portion 8.

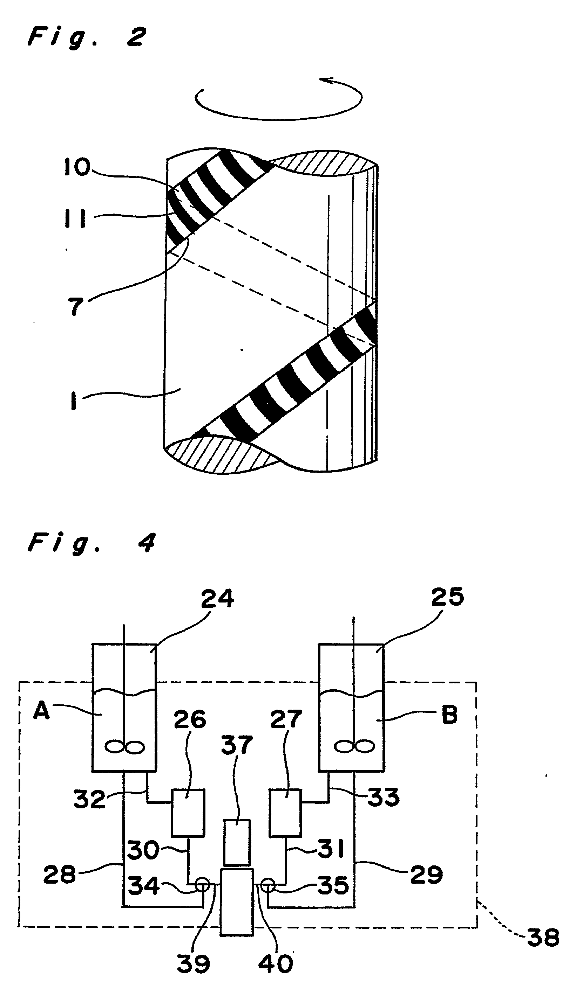

For mixing the reaction raw-materials, the raw materials A and B are fed under pressure into the raw-material discharge openings 4 and 6. The raw material A is only fed into the grooves 7 when it is opposite to the discharge opening 4, by the rotation of the rotation shaft 1. Similarly, the raw material B is only fed into the groove 7 when it is opposite the discharge opening 6 so that portions 10 of the raw material A and portions 11 of the raw material B are scraped into the groove 7 as shown in Fig. 2. While this operation is repeated, the raw materials are already sufficiently mixed, receiving the shearing force through the viscous resistance between the cylindric wall 2a and the raw materials within the groove 7. The raw materials reach the tip end portion 8 of the rotary shaft 1, are released into the mixing chamber 9, and are precisely mixed by a stirring operation. The amounts of the scraped portions 10 and 11 are dependent on rotation-shaft thickness, revolution number per unit time, groove depth, raw-material viscosity, pressure to be applied upon the raw materials. Also, sufficient mixing operation may be achieved, without the final stirring operation through faster rotation of the rotation shaft 1, by more increased shearing forces caused between the shaft 1 and the cylindrical wall 2a. Further, timing adjustment of the pressure feeding is added to control the total mixture discharging amount from the nozzle main body 2.

Also, the rotation shaft 1 may be exposed externally of the cylindric wall 2a by axial movement of the rotation shaft 1 from the position of Fig. 1A into the position of Fig. 1B, so that a washing operation may be easily performed by a wiping operation at the grooves 7. Also, a semiconductor thermo-module is mounted on mixing portion, the portion being cooled to 5°C or lower so that the time of gelatin condition to the hardening condition may be extended from three minutes to about two hours. Continuous injection may be performed by the mixing apparatus of the above-described construction, the mixing discharging of the room-temperature hardening type epoxide bonding agent which does not have about three minutes or five minutes gelatin condition time may be continuously performed by a method of externally releasing the drill, after the given continuous injection, to wipe out the remaining raw materials from the groove 7.

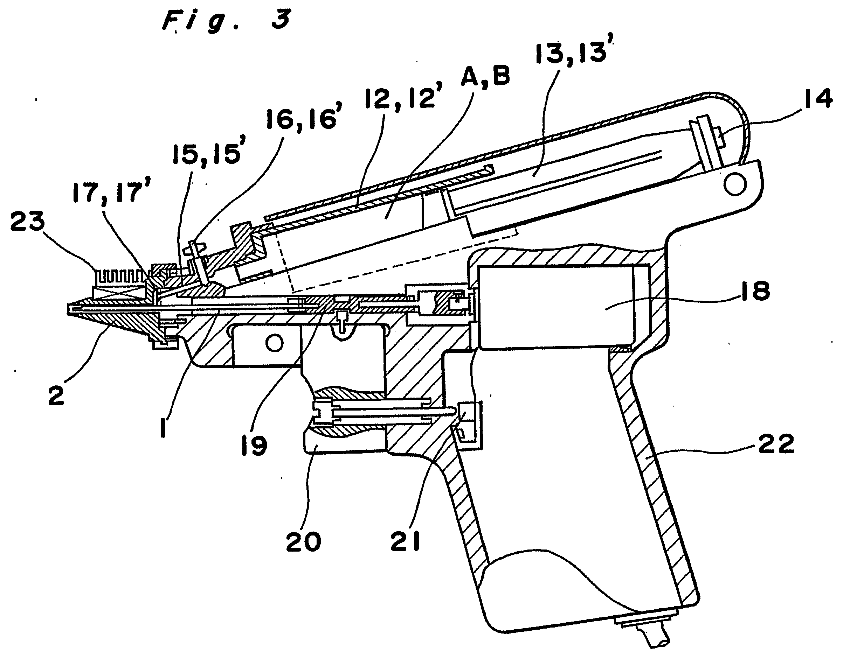

Fig. 3 shows a handy-type apparatus wherein the present invention has been applied to supply a two-liquid type epoxide bonding agent (Aralditrapid). Injector cylinders 12 and 12' made of plastics, as used for medical use, filled with the raw materials A and B are connected with the rearward upper portion of the nozzle main-body 2 through which the rotation shaft 1 longitudinally extends. A spring-type pressure jig 14 for pushing piston 13 and 13' is interposed between the cylinders 12 and 12'. Valves 16, 16' for stopping the reaction raw-material feed during the nozzle-portion washing operation is provided in feed routes 15 and 15' of the reaction liquids between the nozzle main-body 2 and each cylinder 12 and 12'. Numerals 17 and 17' designate reaction raw-material discharge openings of each feed route 15 and 15', which come into contact against one portion of the outer peripheral face of the rotation shaft 1. The rotation shaft 1 is coupled by a coupling portion 19 to a DC motor 18. A switch 21 which starts and stops the motor rotation, and a trigger 20 for the rotation shaft projection can be operated grasped by the hand holding a main-body 22 portion. A semiconductor cooling unit 23 composed of a thermo-module is provided on the nozzle main-body 2 portion to method of delay the reaction by cooling when mixing two-liquid reaction raw materials.

By such construction as described hereinabove, the two-liquid mixing type epoxide bonding agent of the room-temperature hardening type, which was conventionally difficult to be used may be continuously used under the intermittent operation for eight hours or more.

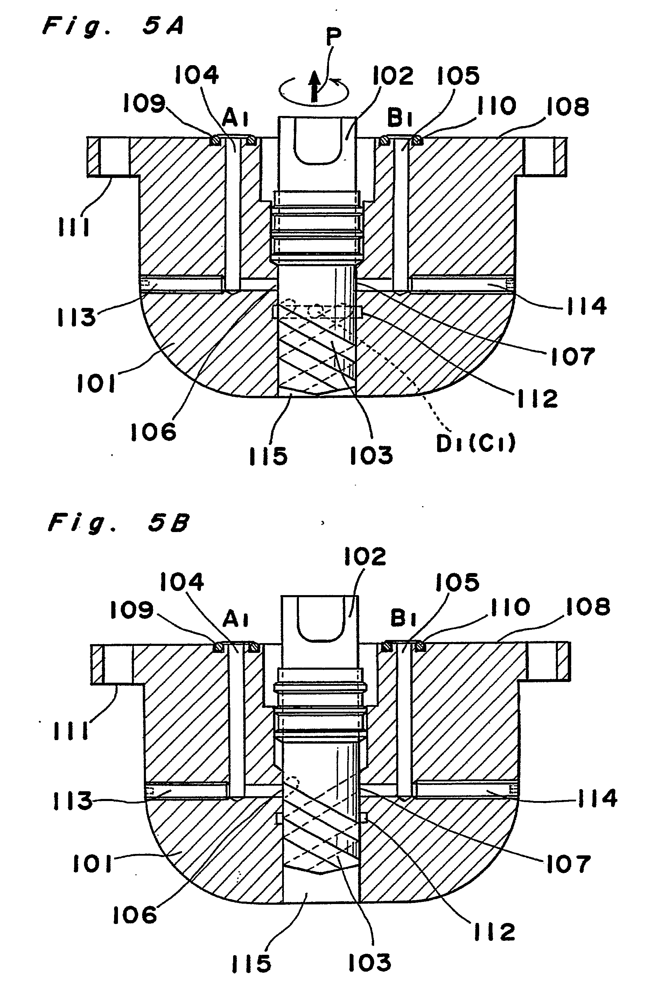

Fig. 4 is a schematic view showing the structure of an apparatus for reactive injection molding which uses a nylon/anion polymerization material having only twenty-second gelatin condition time. Pipings 28, 30, 32 and 29, 31, 33 for circulating each raw-material A and B are respectively connected with tanks 24, 25 for providing two kinds of reaction raw materials A and B in molten condition. The respective pipings have pressure feed pumps 26, 27 and three-way valves 34, 35 for controlling circulation, and are connected to a mixing nozzle 36 similar as in the first embodiment by feed routes 39, 40. A motor and cylinder unit 37 for rotating the rotating shaft (not shown) and/or moves it longitudinally with respect to the nozzle main body are provided, as well as an oil cell, a hot blast cell and a double piping portion 38 which respectively adjust the temperatures to 80°C through 100°C in the case of nylon reaction molding material, to 120°C through 150°C in the case of polyesteramide.

Nor, a second embodiment of the present invention will be described hereinafter. The washing operation of the rotation shaft is performed through manual wiping in the first embodiment. However, in the present embodiment, a washing method is being used which permits an automatic mixing of the reaction materials, so that the time required from the mixing to the hardening phase may become shorter.

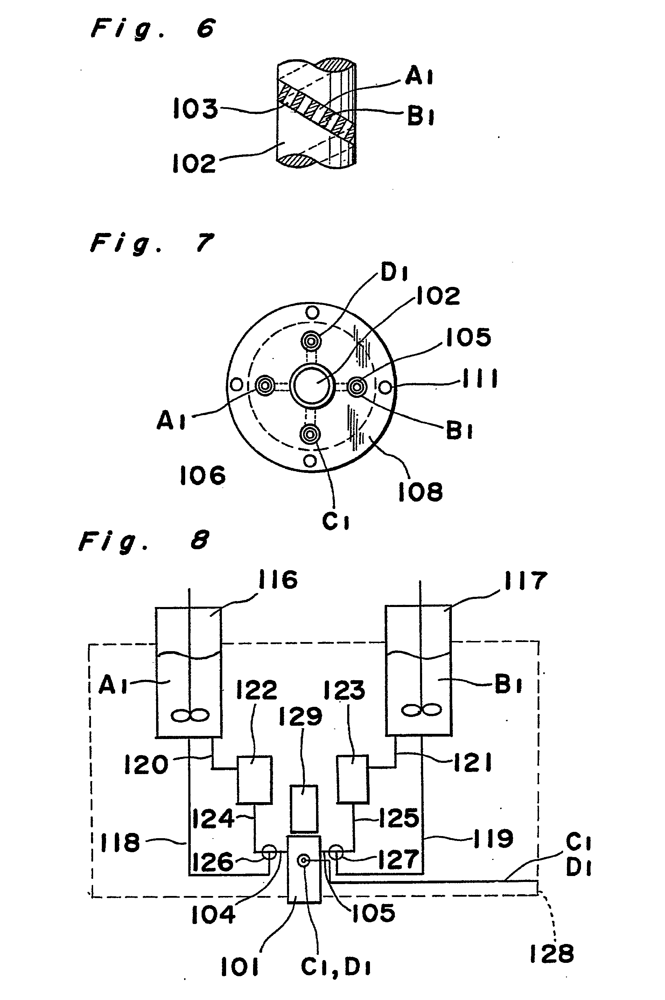

The second embodiment of the present invention is shown in Figs. 5A, 5B through Fig. 8. Figs. 5A, 5B are sectional views showing the mixing head having a grooved rotation shaft having one groove or more on the periphery in accordance with the present invention. The mixing head of the grooved rotation shaft system is provided with a head main-body 101, a rotation shaft 102 having a spiral groove 103 in the peripheral face. A piping connection opening 104 for a primary agent A1, a liquid leakage preventing packing 109, a discharge opening 106 for the primary agent A1, a connection opening 105 for a hardening agent B1, a packing 110, a discharge opening 107 for the hardening agent B1, an $N_2$ gas discharge opening C1 for washing operation and a discharge opening for washing agent ($\epsilon$-caprolactam) D1, a ring-shaped washing opening in the form of a groove 112 are provided, so that the groove 103 of the rotation shaft 102 may be washed when the rotation shaft 102 is stopped. Blind plugs 113, 114 for maintenance use are provided in the pipings of the primary agent A1 and the hardening agent B1. It is to be noted that the blind plugs 113, 114 may be improved stop valves. Fig. 5A shows the condition during the washing operation of the groove 103, where the raw-material discharge openings 106, 107 are blocked in the grooveless portion of the rotation shaft 102. During the mixing injection, the rotation shaft 102 is moved in the direction of an arrow P into the position shown in Fig. 5B, so that the groove 103 conforms with the positions of the discharge openings 106, 107. Then, the primary agent A1 and the hardening agent B1 are sequentially scraped into the groove 103 (as shown in Fig. 6) by high-speed rotation, and is injected from an injection opening 115. It is to be noted that the mounting face 108 of the head main-body 101 is mounted on an upper unit through bolt clamping through bolt holes 111. Also, it is preferable to wash only the groove 103 of the shaft 102 in the condition of Fig. 5A in the washing operation. The positive washing may be performed with a small amount of washing fluid.

Fig. 7 shows a plan view of Fig. 5. The arrangements of the respective piping connection openings of the primary agent A1, the hardening agent B1, the washing gas C1 and the washing liquid D1 are shown.

Fig. 8 shows a schematic view of the structure of a nylon reactive injection molding machine 128 using the mixing head. The primary agent A1 from the raw-material tanks 116 of the primary agent A1 is circulating through the piping 120, the gear pump 122, the piping 124, the three-way valve 126 and the piping 118. The hardening agent B1 from the raw-material tank 117 is circulating through the piping 121, the gear pumping 123, the piping 125, the three-way valve 127 and the piping 119. During the injecting operation, the three-way valves 126, 127 are operated to feed the raw-materials into the piping connected to the piping connection openings 104, 105 of A, B. A motor driving portion 129 is operated simultaneously with the operation of the three-way valve to upwardly move the rotation shaft 102 for a simultaneous start of rotation. At this time point, the washing route is closed. After the discharging operation of a given amount of raw materials, the three-way valves 126, 127 are operated in circulation direction, and the rotation shaft 102 is simultaneously moved downwardly as shown in Fig. 5A. The discharge openings 106, 107 are closed, simultaneously the washing liquid D1 is discharged in a small amount, thereafter the washing N2 gas C1 is discharged to complete the washing operation of the groove 103. The injection is performed in such a cycle as described hereinabove. It is to be noted that, if the shaft is not rotated during the washing operation, the washing opening is preferably formed as a ring-shaped groove on the periphery of the rotation shaft. In this case the groove may be washed in a stationary condition of the rotation shaft. But the washing opening may also be provided in one portion on the periphery of the rotation shaft, in this case the washing operation may be effected during relative rotation of the rotation shaft.

Preferably, a plurality of spiral grooves 103 are provided.

According to the present invention, precisely mixing of comparatively small amounts of a plurality of reaction materials, which have a short gelatin condition time from the mixing to the hardening, by alternate scraping through the groove of the rotation shaft may be provided so that the mixing precision is much better than by manual mixing. The bonding property is kept high and less bonding agent may be used. In this handy-type apparatus the amount of reaction material may be controlled by the number of rotation and the feed pressure by adjustment of groove depth or the diameter of the rotation shaft. Thus, this invention may be applied from dispensers for bonding use to reactive injection molding machines, thus resulting in large industrial value. Also, the mixing may be further promoted through a stirring operation by releasing of a plurality of raw materials, scraped alternately by grooves, into a portion of the nozzle tip end. In an apparatus provided with temperature control means in the raw-material feed transfer or the given route of the mixing, the mixing operation in accordance with the condition of the use, the non-use of each type of mixture may be performed, the reaction speed may be controlled to make the gelatin condition time longer in practical use.

Also, according to the present invention, the mixing head is capable of performing an automatic washing operation in the case of reaction raw materials having only a short gelatin condition time from mixing to hardening. Also, the residual washing liquid is reduced for washing the groove of the shaft, furthermore the raw-material discharge opening and the washing liquid discharge opening are blocked in the no-groove portion of the shaft for dependence, thus making it possible to have the automatic washing operation. The head is capable of raw-material mixing stable in hardening reaction property due to the use of only small amounts of washing liquid.

## Claims

1. A method of mixing reaction materials in the form of liquids by individually feeding the liquids to discharge openings located in a cylindrical wall which surrounds a shaft having at least one spiral groove in its circumferential face and rotating the shaft such that the liquids are fed from the discharge openings through the groove(s) of the shaft to an outlet of the cylindrical wall, characterized in that the liquids are sequentially scraped from the discharge openings into the groove(s), and are finally mixed in a separate mixing chamber at the end of the spiral groove(s).

2. An apparatus for mixing reaction materials in the form of liquids, comprising a nozzle body (2) having individual discharge openings (4, 6) located in a cylindrical wall (2a) which surrounds a shaft (1; 102) at least one spiral groove (7; 103) in its circumferential face, and the shaft being rotatable so that the liquids are fed from the discharge openings through the groove(s) of the shaft to an outlet of the cylindrical wall, characterized in that the shaft (1; 102) having at least one spiral groove (7; 103) is surrounded by a cylindrical wall (2a), the surfaces between the groove(s) (7; 103) at the circumference of the shaft (1; 102) being smooth and tightly fitting into the cylindrical wall (2a), and the lead of the windings being larger than the width of the discharge openings (4, 6; 106, 107).

3. Apparatus according to claim 2, characterized in that the rotatable shaft (1; 102) is axially movable into a cleaning position.

4. Apparatus according to claim 2 or 3, characterized by a separate mixing chamber (9) at the end of the spiral groove(s) (7).

5. Apparatus according to claim 4, characterized in that the shaft (1) has a tip end (8) of reduced diameter provided with stirring blades (8a) within the mixing chamber (9).

6. Apparatus according to claims 3 and 5, characterized in that in the cleaning position the tip end (8) is exposed outside the cylindrical wall (2a).

7. Apparatus according to claim 3, characterized by a washing opening (112) provided in the cylindrical wall for feeding a washing fluid (C1, D1) instead of the mixing reaction materials (A1, B1) into the spiral groove(s) (103) when the end portion of the rotatable shaft (102) is in the cleaning position.

8. Apparatus according to any of claims 2 to 7, characterized by driving means (18; 129) for rotating the shaft (1, 102), the number of revolutions per unit of the time being controllable.

9. Apparatus according to any of claims 2 to 8, characterized by cooling means (23) mounted on the nozzle body (2).

10. Apparatus according to any of claims 2 to 9, characterized by temperature controlling means for adjusting the temperature of the nozzle body.

**Patentansprüche**

1. Verfahren zum Mischen von Reaktionsmaterialien in der Form von Flüssigkomponenten durch getrenntes Zuführen an Zufuhröffnungen in einer Zylinderwand, die eine an ihrer Umfangsfläche mit mindestens einer spiralförmigen Nut ausgestattete Welle umgibt, bei dem die Welle rotiert und die über die Zufuhröffnungen zugeführten Flüssigkomponenten durch die Nut(en) der Welle einer Ausgangsöffnung in der Zylinderwand weiterleitet, dadurch gekennzeichnet, daß die Flüssigkomponenten nacheinander aus den Zufuhröffnungen in die Nut(en) abgeschabt und schließlich in einer getrennten Mischkammer am Ende der Spiralnut(en) gemischt werden.

2. Vorrichtung zum Mischen von Reaktionsmaterialien in der Form von Flüssigkomponenten, mit einem Düsenkörper (2), der einzelne Zufuhröffnungen (4, 6) innerhalb einer Zylinderwand (2a) aufweist, die eine an ihrer Umfangsfläche mit mindestens einer spiralförmigen Nut (7; 103) ausgestatteten Welle (1; 102), und bei der die Welle rotiert und die über die Zufuhröffnungen zugeführten Flüssigkomponenten durch die Nut(en) der Welle einer Ausgangsöffnung in der Zylinderwand weiterleitet;

dadurch gekennzeichnet, daß die mindestens eine spiralförmige Nut (7; 103) aufweisende Welle (1; 102) von einer Zylinderwand (2a) umgeben ist, daß die Flächen zwischen der Nut (den Nuten) (7; 103) am Umfang der Welle (1; 102) glatt ausgebildet sind und abdichtend an der Zylinderwand (2a) anliegen, und daß die Steigung der Spiralwindungen größer als die Breite der Zufuhröffnungen (4, 6; 106, 107) ist.

3. Vorrichtung nach Anspruch 2, dadurch gekennzeichnet, daß die drehbare Welle (1; 102) axial in eine Reinigungsposition bewegbar ist.

4. Vorrichtung nach Anspruch 2 oder 3, gekennzeichnet durch eine getrennte Mischkammer (9) am Ende der spiralförmigen Nut(en) (7).

5. Vorrichtung nach Anspruch 4, dadurch gekennzeichnet, daß die Welle (1) einen Endabschnitt (8) mit reduziertem Durchmesser aufweist, an dem Rührblätter (8a) innerhalb der Mischkammer (9) angeordnet sind.

6. Vorrichtung nach den Ansprüchen 3 und 5, dadurch gekennzeichnet, daß in der Reinigungsposition der Endabschnitt (8) der Welle sich außerhalb der Zylinderwand (2a) befindet.

7. Vorrichtung nach Anspruch 3, gekennzeichnet durch eine Waschöffnung (112) innerhalb der Zylinderwand zum Zuführen einer Waschflüssigkeit (C1, D1) anstelle der Reaktionsmaterialien (A1, B1) in die spiralförmige Nut(en) (103), wenn der Endabschnitt der drehbaren Welle (102) sich in der Reinigungsposition befindet.

8. Vorrichtung nach einem der Ansprüche 2 bis 7, gekennzeichnet durch in der Drehzahl steuerbare Antriebsmittel (18; 129) für die drehbare Welle (1; 102).

9. Vorrichtung nach einem der Ansprüche 2 bis 8, gekennzeichnet durch eine auf dem Düsenkörper (2) angeordnete Kühleinrichtung (23).

10. Vorrichtung nach einem der Ansprüche 2 bis 9, gekennzeichnet durch eine Temperaturregeleinrichtung zum Einstellen der Temperatur des Düsenkörpers.

**Revendications**

1. Procédé pour mélanger des matières réactives présentées sous la forme de liquides, consistant à acheminer individuellement les liquides à des ouvertures débitrices ménagées dans une paroi cylindrique qui entoure un arbre présentant lui-même au moins une gorge hélicoïdale dans sa surface circonférentielle, et à faire tourner l'arbre de telle manière que les liquides soient transportés des ouvertures débitrices à une sortie de la paroi cylindrique en passant par la gorge ou les gorges de l'arbre, caractérisé en ce que les liquides sont successivement raclés à la sortie des ouvertures débitrices dans la gorge ou les gorges et sont finalement mélangés dans une chambre de mélange séparée située à l'extrémité de la ou des gorges hélicoïdales.

2. Appareil pour mélanger des matières réactives présentées sous la forme de liquides, comprenant un corps de buse (2) qui présente des ouvertures débitrices individuelles (4, 6) ménagées dans une paroi cylindrique (2a) qui entoure un arbre (1, 102) présentant lui-même au moins une gorge hélicoïdale (7 ; 103) dans sa surface circonférentielle, et l'arbre pouvant être mis en rotation de telle manière que les liquides soient transportés des ouvertures débitrices à une sortie de la paroi cylindrique en passant par la ou les gorges de l'arbre, caractérisé en ce que l'arbre (1 ; 102) qui présente au moins une gorge hélicoïdale (7 ; 103) est entouré d'une paroi cylindrique (2a), les surfaces situées entre la gorge ou les gorges (7 ; 103) sur la circonférence de l'arbre (1 ; 102) étant lisses et ajustées sans jeu dans la paroi cylindrique (2a), et le pas des spires étant plus grand que la largeur des ouvertures débitrices (4, 6 ; 106, 107).

3. Appareil selon la revendication 2, caractérisé en ce que l'arbre rotatif (1 ; 102) peut être amené à une position de nettoyage par déplacement axial.

4. Appareil selon la revendication 2 ou 3, caractérisé par une chambre de mélange séparée (9) située à l'extrémité de la ou des gorges hélicoïdales (7).

5. Appareil selon la revendication 4, caractérisé en ce que l'arbre (1) possède une extrémité de pointe (8) de diamètre réduit qui est munie de pales d'agitation (8a) à l'intérieur de la chambre de mélange (9).

6. Appareil selon les revendications 3 et 5, caractérisé en ce que, dans la position de nettoyage, l'extrémité de pointe (8) est exposée à l'extérieur de la paroi cylindrique (2a).

7. Appareil selon la revendication 3, caractérisé par une ouverture de lavage (112) prévue dans la paroi cylindrique pour introduire un fluide de lavage (C1, D1) dans la ou les gorges hélicoïdales (103) en remplacement des matières réactives à mélanger (A1, B1) lorsque la portion d'extrémité de l'arbre rotatif (102) se trouve dans la position de nettoyage.

8. Appareil selon une quelconque des revendications 2 à 7, caractérisé par des moyens d'entraînement (18 ; 129) servant à faire tourner l'arbre (1 ; 102), le nombre des tours par unité de temps étant réglable.

9. Appareil selon une quelconque des revendications 2 à 8, caractérisé par des moyens de refroidissement (23) montés sur le corps (2) de la buse.

10. Appareil selon une quelconque des revendications 2 à 9, caractérisé par des moyens de réglage de la température qui servent à régler la température du corps de la buse.

Fig. 1A

Fig. 1B

# Fig. 2

# Fig. 4

Fig. 3

EP 0 209 888 B1

*Fig. 5A*

*Fig. 5B*

Fig. 6

Fig. 7

Fig. 8